Europäisches Patentamt

**European Patent Office**

Office européen des brevets

(11) Publication number: **0 028 516**
**B1**

(12) **EUROPEAN PATENT SPECIFICATION**

(45) Date of publication of patent specification: **27.03.85**

(51) Int. Cl.⁴: $C \ 01 \ B \ 33/28$, $B \ 01 \ J \ 29/28$

(21) Application number: **80303884.3**

(22) Date of filing: **31.10.80**

(54) Method for preparing crystalline zeolite, zeolites prepared thereby, catalysts containing them and use of such catalysts.

(30) Priority: **05.11.79 US 91608**

(43) Date of publication of application:
**13.05.81 Bulletin 81/19**

(45) Publication of the grant of the patent:
**27.03.85 Bulletin 85/13**

(84) Designated Contracting States:
**BE DE FR GB IT LU NL**

(56) References cited:
**EP-A-0 018 089**
**FR-A-2 289 444**
**FR-A-2 289 445**

(73) Proprietor: **MOBIL OIL CORPORATION**
**150 East 42nd Street**
**New York New York 10017 (US)**

(72) Inventor: **Chu, Pochen**
**1173 Ollerton Road**
**West Deptford New Jersey 08066 (US)**
Inventor: **Dwyer, Francis Gerard**
**1128 Talleyrand Road**
**West Chester Pennsylvania 19380 (US)**
Inventor: **McVeigh, Harry Allen**
**13 Hillcrest Road**
**Belle Mead New Jersey 08502 (US)**

(74) Representative: **Cooper, John Anthony et al**
**CARPMAELS & RANSFORD 43 Bloomsbury**
**Square**
**London WC1A 2RA (GB)**

Courier Press, Leamington Spa, England.

## 0 028 516

**Description**

This invention relates to an improved method of preparing crystalline zeolite materials of the kind which have come to be known as "molecular sieves".

Zeolitic materials, both natural and synthetic, have been demonstrated to have catalytic properties for various types of hydrocarbon conversions. Certain zeolitic materials are ordered, porous crystalline aluminosilicates having a definite crystalline structure within which there is a large number of uniformly sized channels, the dimensions of the pores of which are such as to accept for adsorption molecules of certain dimensions while rejecting those of larger dimensions. They have been defined as a rigid three-dimensional framework of $SiO_4$ and $AlO_4$ in which the tetrahedra are cross-linked by the sharing of oxygen atoms whereby the ratio of the total aluminum and silicon atoms to oxygen is 1:2. The electrovalence of the tetrahedra containing aluminum is balanced by the inclusion in the crystal of a cation, for example, an alkali metal or an alkaline earth metal cation. They are susceptible to cation exchange, by which it is possible to vary the properties of a given aluminosilicate by suitable selection of the cation. The spaces between the tetrahedra are usually occupied by molecules of water prior to dehydration.

Prior art techniques have resulted in the formation of a great variety of synthetic aluminosilicates. These aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752) zeolite ZSM-5 (U.S. Patent 3,702,886), zeolite ZSM-11 (U.S. Patent 3,709,979), zeolite ZSM-12 (U.S. Patent 3,832,449), zeolite ZSM-20 (U.S. Patent 3,972,983), zeolite ZSM-35 (U.S. Patent 4,016,245), zeolite ZSM-21 and 38 (U.S. Patent 4,046,859), and zeolite ZSM-23 (U.S. Patent 4,076,842), merely to name a few.

The present invention relates to an improved method of preparing synthetic crystalline zeolite materials having a constraint index between 1 and 12 and a $SiO_2/Al_2O_3$ mole ratio greater than 12 and involves the use, in the preparation, of trialkylmethylammonium compounds. According to the present invention such crystalline zeolite materials, particularly those designated ZSM-5 and ZSM-11, are prepared by crystallizing the substantially pure zeolite material from a mixture of a source of silica and optionally alumina in the presence of a trialkylmethylammonium cation.

Constraint Index (CI) values for some known zeolites are:

| Zeolite | C.I. |
|---------|------|
| ZSM-5 | 8.3 |
| ZSM-11 | 8.7 |
| ZSM-12 | 2 |
| ZSM-23 | 9.1 |
| ZSM-35 | 4.5 |
| ZSM-38 | 2 |
| ZSM-48 | 3.4 |
| TMA Ofretite | 3.7 |

The significance and manner of determination of constraint index is set forth in our GB Specification 1,446,522. Zeolites ZSM-5 and ZSM-11 are defined by the X-ray data presented in our U.S. Specifications 3,702,886 and 3,709,979.

The above zeolites can be used either in the alkali metal form, e.g. the sodium form, the ammonium form, the hydrogen form or another univalent or multivalent form. When used as catalysts they will be subjected to thermal treatment to remove part or all of any organic constituent.

Zeolites ZSM-5 and ZSM-11 have been crystallized in the presence of quaternary ammonium compounds or precursors thereof, e.g. in the case of ZSM-5, tetrapropylammonium (TPA) ions; and in the case of ZSM-11, tetrabutylammonium (TBA) ions. In these cases the functional organic groups in the quaternary have been $C_2$ to $C_5$ compounds and in most cases the quaternary ion has been symmetrical with respect to the organic components, i.e., all organic components are the same. Since in most cases symmetrical $C_2$ to $C_5$ and greater quaternary compounds are not commercially available it is necessary to use precursor materials such as a trialkylamine and the corresponding organic halide. Since reaction of the precursors is not complete the unreacted precursor materials must be recovered from the crystallization mixture at the completion of crystallization for eventual disposal. Therefore, use of precursor materials in zeolite synthesis involves handling toxic and potentially hazardous chemicals, disposal of unreacted

2

materials and it extends the time required for synthesis because an additional period of time is required for the precursors to react.

The synthesis of trialkylmethylammonium compounds from trialkylamines and a methyl halide proceeds readily and such materials are commercially available as water solutions. Using such low-cost materials we have been able to synthesize ZSM-5 and ZSM-11 of high quality, and the raw material handling problems and related disposal problems have been eliminated.

The crystalline zeolites can be prepared from a reaction mixture containing a source of silica, optionally alumina, trialkylmethylammonium (TAMA) ions, an alkali metal oxide, e.g. sodium, and water, and having a composition in terms of mole ratios of oxides, falling within the following ratios:

For ZSM-5

| Reactants | Broad | Preferred |
|---|---|---|
| $SiO_2/Al_2O_3$ | >5 | >20 |
| $M_2O/(TAMA)_2O$ | 0 to 1000 | 0.01 to 100 |
| $M_2O/SiO_2$ | 0 to 30 | 0.01 to 5.0 |
| $(TAMA)_2/SiO_2$ | 1 to 3000 | 5 to 500 |

For ZSM-11

| Reactants | Broad | Preferred |
|---|---|---|
| $SiO_2/Al_2O_3$ | >5 | >20 |
| $M_2O/(TAMA)_2O$ | 0 to 1000 | 0.01 to 100 |
| $M_2O/SiO_2$ | 0 to 30 | 0.01 to 5.0 |
| $H_2O/SiO_2$ | 1 to 3000 | 5 to 500 |

wherein M in all of the above is alkali or alkaline earth metal, and TAMA is a trialkylmethylammonium ion whose alkyl groups can be $C_3H_7$ or $C_4H_9$, and maintaining the respective mixtures at crystallization temperature until crystals of the zeolite materials are formed.

Crystallization can be carried out at either static or stirred condition. In our examples static conditions, using polypropylene jars at 100°C or teflon-lined stainless steel autoclaves at 160°C, and stirred conditions using agitated stainless steel autoclaves at 100—160°C, were employed. The total useful range of temperatures is 80°C to 250°C for about 2 hours to 150 days. Thereafter, the zeolite crystals are separated from the liquid and recovered. The reaction mixture can be prepared from materials which supply the appropriate oxides. Reaction mixtures can include sodium silicate, silica hydrosol, silica gel, silicic acid, clays, and sodium hydroxide, and trialkylmethylammonium salts, e.g. tripropylmethylammonium chloride. (TPMACL), and tributylmethylammonium chloride (TBMACL), merely to name a few. The reaction mixture can be prepared either batch-wise or continuously. Crystal size and crystallization time of the zeolite compositions will vary with the nature of the reaction mixture employed and the crystallization conditions.

Catalysts prepared from zeolites synthesized according to the invention are shaped in a wide variety of particle sizes, for instance in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the material can be extruded before drying, or dried (or partially dried) and then extruded.

The zeolites can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, impregnated therein or physically intimately admixed therewith. Such component can be impregnated into or onto it such as, for example, by, in the case of platinum, treating the zeolite with a solution containing a platinum metal-containing ion. Thus, suitable platinum compounds include chloroplatinic acid, platinous chloride and various compounds containing the tetrammine platinum complex.

Especially in their metal, hydrogen, ammonium and trialkylmethylammonium forms the zeolites can be beneficially converted to a catalytically applicable form by thermal treatment. This thermal treatment is generally performed by heating one of these forms in an atmosphere such as air, nitrogen, steam, etc., at a temperature of at lesat 371°C for at least 1 minute and generally no more than 20 hours to remove part or all of the water and the organic constituent. While subatmospheric pressure can be employed for the thermal treatment, atmospheric pressure is desired for reasons of convenience. The thermal treatment can be performed at a temperature up to about 927°C. The thermally treated product is particularly useful in the

3

catalysis of certain hydrocarbon conversion reactions. Simple dehydration can also be performed at ambient temperatures by placing the zeolite catalyst in a vacuum, but a longer time is required to obtain a sufficient amount of dehydration.

In the case of many catalysts it is desired to composite the zeolite with another material resistant to the temperatures and other conditions employed in organic conversion processes, as described in our European Specification 000 1695.

Employing a catalytically active form of the zeolite catalysts prepared by the improved method of this invention which may contain additional hydrogenation components, reforming stocks can be reformed. The catalysts can also be used for hydroisomerization of normal paraffins, when provided with a hydrogenation component, e.g., platinum. Other reactions which can be accomplished employing the catalyst of this invention containing a metal, e.g., platinum, include hydrogenation-dehydrogenation reactions and desulfurization reactions, olefin polymerization (oligomerization) and other organic compound conversion such as the conversion of alcohols (e.g. methanol) to hydrocarbon.

In the following illustrative examples ZSM-5 and ZSM-11 of good crystallinity were prepared. Whenever adsorption data are set forth for comparison of sorptive capacities for water, cyclohexane and n-hexane, they were determined as follows:

A weighed sample of the calcined adsorbent was contacted with the desired pure adsorbate vapor in an adsorption chamber, evacuated to <1 mm and contacted with 12 mm Hg water vapor or 20 mm Hg of cyclohexane or n-hexane vapor, pressures less than the vapor-liquid equilibrium pressure of the respective adsorbate at room temperature. The pressure was kept constant (within about ±0.5 mm) by addition of adsorbate.vapor controlled by a manostat during the adsorption period (which did not exceed about eight hours). As adsorption proceeded, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample in g/100 g of calcined adsorbent.

Examples 1—4

The following examples, compiled in tabular form as Table 1, immediately hereinbelow, give details as to formulation, reaction conditions, and properties of the products obtained using the trialkylmethyl-ammonium (TAMA) compounds, e.g., TBMA, TPMA, as well as using the prior art compounds tetrabutylammonium (TBA) and tetrapropylammonium (TPA) as points of reference.

TABLE 1
Zeolite synthesis with TAMA compound

| Example | 1 | 2 | 3 | 4 |
|---|---|---|---|---|
| Formulation | | | | |
| Silicate solution | | | | |
| Q-Brand g | 344 | 344 | 344 | 344 |
| $H_2O$ g | 200 | 200 | 200 | 200 |
| Daxad 27 g | 1 | 1 | 1 | 1 |
| HiSil g | — | — | — | — |
| Alum. solution | | | | |
| $Al_2(SO_4)_3 \cdot XH_2O$ g | 11.9 | 11.9 | 11.9 | 11.9 |
| $H_2SO_4$ (100%) g | 34 | 34 | 29 | 29 |
| NaCl g | 20 | 20 | 40 | 40 |
| $H_2O$ g | 200 | 200 | 200 | 200 |
| $Al(NO_3)_3 \cdot 9H_2O$ g | — | — | — | — |
| TBMACl (50%) g | — | 58.6 | — | — |
| TBABr g | 34 | — | — | — |
| TPMACl (50%) g | — | — | — | 76 |
| TPABr g | — | — | 44 | — |
| TEMACl (50%) g | — | — | — | — |
| NaOH g | — | — | — | — |
| $H_2O$ g | 70 | 50 | 70 | 40 |
| Crystallization | | | | |
| Temp., °C | 160 ——————————— | | | |
| Time, days | 4 | 7 | 4 | 7 |
| Agitation | None ——————————— | | | |
| Crystallinity | ZSM-11 | ZSM-11 | ZSM-5 | ZSM-5 |
| | 90 | 65 | 105 | 85 |

Examples 5—11

The following examples, compiled in tabular form as Tables 2A and 2B, immediately hereinbelow, give details as to formulation, reaction condition and properties of the products obtained with respect to the crystallization of ZSM-5 with various reaction mixtures in the presence of tripropylmethylammonium (TPMA) ions (Examples 5—9 and 11) and tetrapropylammonium bromide (TPABr) as a point of reference (Example 10).

TABLE 2A
ZSM-5 Synthesis with TPMACl

| Examples | 5 | 6 | 7 | 8 | 9 | 10 | 11 |
|---|---|---|---|---|---|---|---|
| **Formulation** | | | | | | | |
| Silicate solution | | | | | | | |
|   Q-Brand, g | 6872 | 6872 | ————————————————→ | | | | 6880 |
| H$_2$O, g | 3976 | 3976 | ————————————————→ | | | | 4000 |
| Daxad 27, g | 20 | 20 | ————————————————→ | | | | 20 |
| **Alum. solution** | | | | | | | |
|   Al$_2$(SO$_4$)$_3$ · 14 H$_2$O, g | 238 | 238 | ————————————————→ | | | | 238 |
| H$_2$SO$_4$ (100%), g | 574 | 574 | 574 | 520 | 600 | — | 570 |
| NaCl, g | 1289 | 1289 | ————————————————→ | | | | — |
| H$_2$O, g | 4082 | 4082 | ————————————————→ | | | | 1682 |
| TPMACl (50%), g | 778 | 778 | 1556 | 778 | 778 | — | 1238 |
| TPABr (28.5%), g | — | — | — | — | — | 1498 | — |
| TMACl (50%), g | — | — | — | — | — | — | 700 |
| **Crystallization 1st stage** | | | | | | | |
|   Temp., °F | 320 | 225 | 220 | 220 | 225 | 215 | 320 |
| Time, hr. | 12 | 150 | 161 | 145 | 170 | 136 | 17 |
| Agitation, rpm | 90 | 90 | 90 | 90 | 90 | 90 | 90 |
| **2nd stage** | | | | | | | |
|   Temp., °C | — | 160 | ————————————————→ | | | | — |
| Time, hr. | — | 9 | 8 | 8 | 8 | 5 | — |
| Agitation, rpm | — | 90 | ————————————————→ | | | | — |
| Crystallinity, % | 85 | 85 | 85 | 85 | 80 | 90 | 90 |

(1) 474 g added to the gel mixture.

TABLE 2B
Product properties of ZSM-5 from TPMACI

| Examples | 5 | 6 | 7 | 8 | 9 | 10 | 11 |
|---|---|---|---|---|---|---|---|
| Formulation of reaction mixture | | | | | | | |
| $SiO_2$, wt % | 89.4 | 82.4 | 82.1 | 82.3 | 83.6 | 82.5 | 83.1 |
| $Al_2O_3$, wt % | 2.1 | 2.1 | 2.1 | 2.1 | 2.1 | 2.0 | 2.1 |
| Na, wt % | 0.56 | 0.51 | 0.27 | 0.48 | 2.86 | 0.85 | 0.51 |
| N, wt % | 0.84 | 0.92 | 0.91 | 0.87 | 0.77 | 0.75 | 0.92 |
| C, wt % | 7.34 | 7.74 | 7.68 | 7.53 | 6.98 | 7.21 | 6.91 |
| Ash, wt % | 89.4 | 87.9 | 87.9 | 88.9 | 88.6 | 87.8 | 89.4 |
| Mole ratios of product | | | | | | | |
| $Al_2O_3$ | 1.0 | 1.0 | 1.0 | 1.0 | 1.0 | 1.0 | 1.0 |
| $SiO_2$ | 72.4 | 66.7 | 66.5 | 66.6 | 67.8 | 70.1 | 67.3 |
| $Na_2O$ | 0.59 | 0.54 | 0.29 | 0.51 | 3.02 | 0.94 | 0.54 |
| N | 2.91 | 3.19 | 3.16 | 3.02 | 2.67 | 2.73 | 3.19 |
| C | 29.7 | 31.3 | 31.1 | 30.5 | 28.5 | 30.6 | 28.0 |
| C/N | 10.2 | 9.8 | 9.9 | 10.4 | 10.6 | 11.2 | 8.8 |
| Adsorption, % wt | | | | | | | |
| $H_2O$ | 6.2 | 10.4 | 9.2 | 9.6 | 14.6 | 10.0 | 9.2 |
| $CyC_6$ | 2.9 | 7.4 | 5.8 | 7.0 | 6.4 | 7.2 | 4.8 |
| $nC_6$ | 5.7 | 10.9 | .5 | 10.5 | 10.0 | 12.0 | 9.5 |

**Claims**

1. A method for preparing zeolite ZSM-5 or ZSM-11 which comprises preparing a reaction mixture containing a source of an alkali metal oxide, an oxide of silicon, optionally an oxide of aluminum, TAMA ion, and water and having a composition, in terms of mole ratios of oxides, falling within the following ranges:

$SiO_2/Al_2O_3 > 5$
$M_2O/(TAMA)_2O = 0$ to 1000
$M_2O/SiO_2 = 0$ to 30
$H_2O/SiO_2 = 1$ to 3000

wherein M is an alkali or alkaline earth metal and TAMA is tripropylmethylammonium or tributylmethylammonium and maintaining said mixture under crystallization conditions until crystals of said zeolite are formed.

2. A method according to Claim 1 wherein said mixture has a composition, in terms of mole ratios of oxides, falling within the following ranges:

$SiO_2/Al_2O_3 > 20$
$M_2O/(TAMA)_2O = 0.01$ to 100
$M_2O/SiO_2 = 0.01$ to 5.0
$H_2O/SiO_2 = 5$ to 500

wherein M and TAMA are as before.

## 0 028 516

### Patentansprüche

1. Verfahren zur Herstellung eines Zeolithen ZSM-5 oder ZSM-11, das die Bereitung einer Reaktionsmischung, die eine Quelle für ein Alkalimetalloxid, ein Siliciumoxid, gegebenenfalls ein Aluminiumoxid, ein TAMA-Ion sowie Wasser enthält und eine Zusammensetzung aufweist, die, ausgedrückt als Mol-Verhältnisse von Oxiden, in die folgenden Bereiche fällt:

$SiO_2/Al_2O_3 > 5$
$M_2O/(TAMA)_2O = 0$ bis $1000$
$M_2O/SiO_2 = 0$ bis $30$
$H_2O/SiO_2 = 1$ bis $3000$

worin M ein Alkali- oder Erdalkali-Metall ist und TAMA Tripropylmethylammonium oder Tributylmethylammonium ist, und das Halten dieser Mischung unter Kristallisationsbedingungen, bis Kristalle des genannten Zeolithen gebildet sind, umfaßt.

2. Verfahren nach Anspruch 1, bei dem die genannte Mischung eine Zusammensetzung, ausgedrückt als Mol-Verhältnisse von Oxiden, aufweist, die in die folgenden Bereiche fällt:

$SiO_2/Al_2O_3 > 20$
$M_2O/(TAMA)_2O = 0,01$ bis $100$
$M_2O/SiO_2 = 0,01$ bis $5,0$
$H_2O/SiO_2 = 5$ bis $500$

worin M und TAMA wie oben definiert sind.

### Revendications

1. Méthode de préparation d'une zéolite ZSM-5 ou ZSM-11 consistant à préparer un mélange réactionnel contenant une source d'oxyde de métal alcalin, un oxyde de silicium, éventuellement un oxyde d'aluminium, un ion TAMA et de l'eau, et ayant une composition en terms de rapports molaires d'oxydes tombant dans les intervalles suivants:

$SiO_2/Al_2O_3 > 5$
$M_2O/(TAMA)_2O = 0$ à $1000$
$M_2O/SiO_2 = 0$ à $30$
$H_2O/SiO_2 = 1$ à $3000$

dans laquelle:
M représente un métal alcalin ou alcalino-terreux, et
TAMA représente le tripropylméthylammonium ou le tributylméthylammonium, et en maintenant ce mélange dans des conditions de cristallisation jusqu'à ce que se forment des cristaux de cette zéolite.

2. Procédé selon la revendication 1, dans lequel ce mélange a une composition, en termes de rapports molaires d'oxydes tombant dans les intervalles suivants:

$SiO_2/Al_2O_3 > 20$
$M_2O/(TAMA)_2O = 0,01$ à $100$
$M_2O/SiO_2 = 0,01$ à $5,0$
$H_2O/SiO_2 = 5$ à $500$

dans lesquels:
M et TAMA sont tels que ci-dessus.

8